# EUROPEAN PATENT APPLICATION

(11) **EP 4 317 572 A1**
(43) Date of publication of application: **07.02.2024**
(21) Application number: 22841120.3
(22) Date of filing: 17.06.2022
(51) Int. Cl.: D06F 39/00, C02F 1/52

(54) **WASHING MACHINE CONTROL METHOD AND WASHING MACHINE**

(30) Priority: 13.07.2021 CN 202110790982
(71) Applicant: Qingdao Haier Washing Machine Co., Ltd., Qingdao, Shandong 266101 (CN); HAIER SMART HOME CO., LTD., Laoshan District Qingdao Shandong 266101 (CN)
(72) Inventor: LIU, Kai, Qingdao, Shandong 266101 (CN); XU, Sheng, Qingdao, Shandong 266101 (CN); LV, Yanfen, Qingdao, Shandong 266101 (CN); LV, Peishi, Qingdao, Shandong 266101 (CN)
(74) Representative: Winter, Brandl - Partnerschaft mbB
(86) International application number: PCT/CN2022/099380
(87) International publication number: WO 2023/284480

(57) **Abstract**

A washing machine control method and a washing machine are provided. The washing machine comprises: a water holding barrel (100); a circulation filtration pipeline of which a water inlet and a water outlet are connected with the water holding barrel (100) respectively, and in which a circulation pump (400) is arranged; a filter device (600) provided between a water outlet of the circulation pump (400) and the water outlet of the circulation filtration pipeline. The control method comprises: turning on the circulation pump (400), communicating the circulation filtration pipeline, the washing machine performing to circulate and filter water in rinsing program; turning off the circulation pump (400) after the rinsing program is completed; turning on the circulation pump (400) when a first setting condition is met; and cutting off the circulation filtration pipeline when a second setting condition is met. The circulation pump (400) of the washing machine is turned off after the rinsing is completed, so that the water in the pipeline between the filter device (600) and the circulation pump (400) flows back, the air enters in the pipeline between the filter device (600) and the circulation pump (400). After the circulation pump (400) is turned on again, the air in the pipeline is forced into the filter device (600), the sewage in the filter device can be fully discharged, and there is no residual sewage in the filter device.

## Description

### Field

The invention belongs to the technical field of washing machine, and in particular relates to a washing machine control method and the washing machine.

### Background

During the washing process of the laundry by the washing machine, the lint is produced from the laundry fall into the washing water due to the friction between the laundry and between the laundry and the washing machine. If the lint in the washing water cannot be removed, the lint is likely to adhere to the surface of the laundry after washing, so the washing effect of the laundry is affected. For this reason, a filter for filtering lint is installed on the existing washing machine. Washing water passes repeatedly through the filter during the washing process to remove lint from the washing water.

The filter of the existing washing machine is generally arranged inside the inner barrel or the drain pump, and is used to filter out lint and sundries in the washing water. However, after the washing machine has been used for a long time, the filter is filled with lint and debris, which will affect the filtering effect of the filter, cause the drain valve/drain pump to be blocked, and easily breed bacteria. So the filter needs to be cleaned in time, otherwise the washing water is polluted to cause the laundry to be subject to secondary pollution and affect the health of users. However, the filter of most washing machines needs to be taken out for being cleaned manually by the user, which is inconvenient to operate.

The Chinese patent application No. 201310612183.8 discloses a filter and a washing machine. The filter includes a filter cylinder and a filter screen. The cylinder is provided with a water inlet, a water outlet and a sewage outlet. The filter is installed on the insider of the filter cylinder and divided into two parts, the inner chamber and the outer chamber. The upper of the inner chamber is connected with the water inlet, and the lower is connected with the sewage outlet. The outer chamber is connected with the water outlet. The sewage flows into the inner chamber from the water inlet, enters the outer chamber after being filtered by the filter screen, and flows out through the water outlet. The filtered impurities are discharged from the sewage outlet.

In the above solution, through the arrangement of the filter screen, the filtered impurities are not easy to hang on the filter screen and are easier to be discharged. The need for users to manually clean the filter screen is reduced, but the filter cannot be fully and automatically cleaned. The filter still needs to be manually cleaned up by users. In addition, the filtered impurities are drained out from the sewage outlet on the bottom of the filter together with the washing water. The sewage is drained out under the gravity, so it is possible not be fully drained out. Or the sewage is drained at a slow speed, so the sewage cannot be completely drained out when the washing machine stops running.

In view of this, the present invention is proposed.

### Summary

The problem to be solved by the present invention is to overcome the deficiencies of the prior art, and a control method of a washing machine and a washing machine are provided. After the rinsing program of the washing machine is finished, the circulation pump is turned off first, so that the water between the circulation pump and the filter device flows back, and the air enters the pipeline between the circulation pump and the filter device. The circulation pump is controlled to turn on again, so that the air in the pipeline can be forced into the filter device, and then the sewage can be fully drained out of the filter device under the action of the air pressure. So the sewage is avoided being remained in the filter device after the washing machine stops running, which is beneficial to ensure the cleanliness of the filter device.

In order to solve the problems, the present invention adopts the following basic idea of technical solution.

A control method for a washing machine, the washing machine comprising:
a water holding barrel,
a circulation filtration pipeline, of which a water inlet and a water outlet are connected with the water holding barrel respectively, and in which a circulation pump is arranged; and
a filter device, arranged between a water outlet of the circulation pump and the water outlet of the circulation filtration pipeline.

The control methods include:
turning on the circulation pump to open the circulation filtration pipeline, the washing machine performing to circulate and filter water in rinsing process;
turning off the circulation pump after the rinsing process is completed;
turning on the circulation pump when a first setting condition is met; and
cutting off the circulation filtration pipeline when a second setting condition is met.

Further, the cutting off the circulation filtration pipeline includes: turning off the circulation pump.

Alternatively, a switching device is provided on the circulation filtration pipeline. The switching device is located between the water outlet of the circulation pump and the filter device, and is connected with an external drainage pipeline for draining water out of the washing machine.

A process of communicating the circulation filtration pipeline comprises: connecting the filter device with the water outlet of the circulation pump by the switching device. A process of cutting off the circulation filtration pipeline for the washing machine comprises: connecting the external drainage pipeline with the water outlet of the circulation pump by the switching device.

Further, the first setting condition is that the circulation pump is in the off state for a first set time t1;
and/or, the second setting condition is that the circulation pump is in the on-state for a second set time t2.

Further, the first setting condition is: the water level in the pipeline between the circulation pump and the filter device reaches a first set value H1.

The second setting condition is: the water level in the pipeline between the circulation pump and the filter device reaches a second set value H2.

Among them, H 1 <H2.

Further, the filter device includes:
a filter chamber;
a filter mechanism, rotatably arranged in the filter chamber; and
a driving mechanism, for driving the filter mechanism to rotate in the filter chamber.

The control method also includes: after the rinsing program is completed, turning on the drive mechanism to drive the filter mechanism to rotate in the filter chamber.

Preferably, when the first setting condition is met, the driving mechanism is in working state to drive the filter mechanism to continuously rotate.

Further, if it is judged by the washing machine that the current running program is the last rinsing in the washing process, the circulation pump is turned off after the rinsing is completed, and the circulation pump is turned on after the first setting condition is met.

Further, if it is judged by the washing machine that the current running program is not the last rinsing in the washing process, performing the following operations after the rinsing is completed:
the circulation pump being kept in working state; and
cutting off the circulation filtration pipeline when the third setting condition is met.

Preferably, the third setting condition is a third preset time t₃ after the rinsing process is completed.

Preferably, after the rinsing is completed, the driving mechanism of the filter device is turned on to drive the filter mechanism to rotate in the filter chamber.

Further, the filter device is connected with a sewage pipeline through which the filtered impurities are drained out, and a sewage control valve for controlling the on-off of the sewage pipeline is arranged in on the sewage pipeline.

The control method also includes:
the sewage control valve being kept in close when the washing machine performs a circulating and filtering operation rinsing; and
after the circulation pump is turned off and the first setting condition is met, turning on the circulation pump, and opening the sewage control valve to communicate the sewage pipeline.

Another object of the present invention is to provide a washing machine, including: a water holding barrel, a circulation filtration pipeline of which a water inlet and a water outlet are communicated with the water holding barrel respectively, and a circulation pump and a filter device arranged on the circulation filtration pipeline. The water inlet of the filter device is located above the highest water level of the washing machine.

The washing machine adopts the above-mentioned control method of the washing machine.

Further, the filter device is arranged above the water holding barrel.

Preferably, the circulation pump is arranged under the water holding barrel.

Through the above solutions, the present invention has the following advantages compared with the prior art.

In the present invention, the circulation pump of the washing machine is turned off after the rinsing is completed. During the closing period of the circulation pump, the water in the pipeline between the filter device and the circulation pump flows back to the circulation pump, so that air enters the pipeline between the filter device and the circulation pump. After then, when the circulation pump is turned on again, the air in the pipeline is first forced into the filter device, and the sewage is drained out of the filter device under the pressure of the air therein. When the second setting condition is met, the circulation filtration pipeline is cut off, water in the pipeline is prevented from entering the filter device. So the sewage in the filter device can be fully discharged, there is no residual sewage in the filter device after the washing machine finishes operation, and the cleanliness of the filter device is ensured.

In the present invention, the filter device includes a filter mechanism being capable of rotating in the filter chamber. The filtered impurities attached on the outer surface of the filter mechanism are stripped off the filter mechanism under the centrifugal force generated by the rotation and the impact of the stirred water flow in the filter chamber. So the efficiency of removing the filtered impurities is high.

In the present invention, the circulation pump is turned off after the last rinsing in the washing machine is completed. The circulation pump is turned on again after the first setting condition is met. After the intermediate rinsing is completed, the circulation pump is kept in working state and continues to deliver water into the filter device for flushing. In this way, the circulation pump is prevented from being turned on and off frequently during the operation of the washing machine, thereby affecting the service life of the circulation pump. At the same time, the sewage in the filter device can be fully discharged after the last rinsing is completed. So there is no sewage residue in the filter device after the washing machine finishes running.

In the present invention, the sewage control valve is set to control whether the sewage in the filter device can be drained. After the rinsing is completed, the sewage control valve is kept in close, and the circulation pump is in closed state. When the sewage control valve is opened again and the circulation pump is turned on, the air in the pipeline passes into the filter device to generate pressure, and the sewage in the filter device is fully discharged under the pressure.

In the present invention, the filter device is arranged above the water holding barrel so that it is located higher than the highest water level of the washing machine as much as possible. When the circulation pump is turned off, the distance through which the water in the pipeline can flow back is longer, and the amount of air entering in the pipe is larger. After the circulation pump is turned on again, more air can be forced into the filter device, so it is ensured that the sewage is fully drained out, there is no residues.

The specific embodiments of the present invention are further described in detail below in conjunction with the accompanying drawings.

### Description of drawings

The accompanying drawings, as a part of the present invention, are used to further understand the present invention. The embodiments of the present invention and their descriptions are used to explain the present invention, but do not improperly limit to the present invention. Apparently, the drawings in the following description are only some embodiments, and those skilled in the art can also obtain other drawings according to these drawings without creative efforts. In the figures:
Fig. 1 is a structural diagram of washing machine in the embodiments of the present invention;
Fig. 2 is an enlarged diagram of place A in Fig. 1 of the present invention;
Fig. 3 is a structural diagram of the filter device in the embodiments of the present invention;
Fig. 4 is a diagram of the B-B section in Fig. 3 of the present invention.
Fig. 5 is a flow chart of the control method in Embodiment 1 of the present invention;
Fig. 6 is a diagram of cleaning the filter device of the washing machine after intermediate rinsing in Embodiment 1 of the present invention;
Fig. 7 is a diagram of the first stage of cleaning the filter device of the washing machine after the last rinsing in Embodiment 1 of the present invention;
Fig. 8 is a diagram of the second stage of cleaning the filter device of the washing machine after the last rinsing in Embodiment 1 of the present invention;
Fig. 9 is a diagram of the third stage of cleaning the filter device of the washing machine after the last rinsing in Embodiment 1 of the present invention;
Fig. 10 is an enlarged diagram of the drainage process of the washing machine in Embodiment 2 of the present invention;
Fig. 11 is an enlarged diagram of point C in Fig. 10 of the present invention.

In the figure: 100. water holding barrel; 110. window pad; 210. drainage pipeline; 220. circulation pipeline; 230. return water pipeline; 231. return water control valve; 240. sewage pipeline; 241. sewage control valve; 250. external drainage pipeline; 260. drainage pipe of the water holding barrel; 270. switching device; 400. circulation pump; 500. recovery device; 501. filtered impurities; 510. housing; 520. filter assembly; 531. first chamber; 532. second chamber;

600. filter device; 601. first limiting surface; 602. second limiting surface; 603. third limiting surface; 604. fourth limiting surface; 605. fifth limiting surface; 606. sixth limiting surface 610. filter chamber; 6101. water inlet; 6102. filtered water outlet; 6103. sewage outlet; 6104. installation port; 611. sealing support part; 612. sleeve part; 613. reinforcing rib; 620. filter mechanism; 621. water outlet joint; 622. rotation support part; 623. filter screen support part; 624. motor installation part; 625. filter screen; 631. first bearing; 632. second bearing; 641. first sealing member; 642. second sealing member; 643. third sealing member; 650. filter chamber flange; 651. the connection portion; 652. insertion portion; 653. through-opening; 660, driving mechanism.

It should be noted that these drawings and descriptions are not intended to limit the scope of the present invention in any way, but illustrate the concept of the present invention for those skilled in the art by referring to specific embodiments.

### Embodiments

In order to make objects, technical solutions and advantages of the embodiments of the present invention clearer, the solutions in the embodiments are clearly and completely described as follows in combination with accompanying drawings in the embodiments of the present invention. The following embodiments are used for illustrating the present invention, rather than limiting the scope of the present invention.

In the description of the present invention, it should be noted that, the orientation or positional relationship indicated by such terms as "up", "down", "front", "rear", "left", "right", "vertical", "inner" and "outer" is the orientation or positional relationship based on the accompanying drawings. Such terms are merely used for conveniently and simplified describing the present invention, rather than indicating or implying that the device or element referred to must be located in a certain orientation or must be constructed or operated in a certain orientation. Therefore, the terms cannot be understood as a limitation to the present invention.

In the description of the present invention, it should be noted that, unless otherwise stipulated and defined definitely, such terms as "installed", "connected" and "in connection" should be understood in their broad sense, e.g., the connection can be a fixed connection, a detachable connection or an integral connection; can be mechanical connection or electrical connection; and can be direct connection or can be indirect connection through an intermediate. For those skilled in the art, specific meanings of the above terms in the present invention can be understood according to specific conditions.

### Embodiment 1

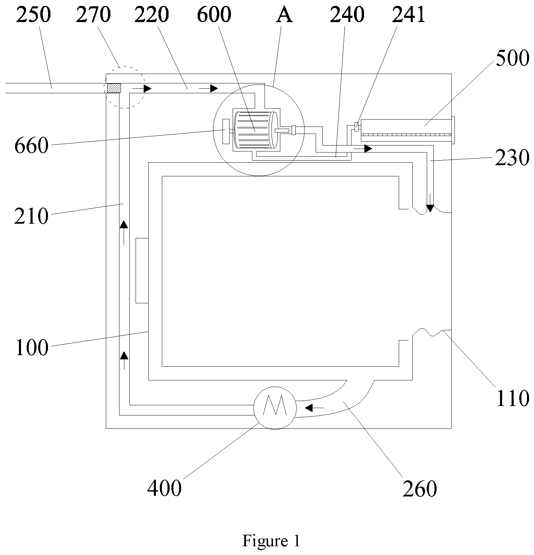

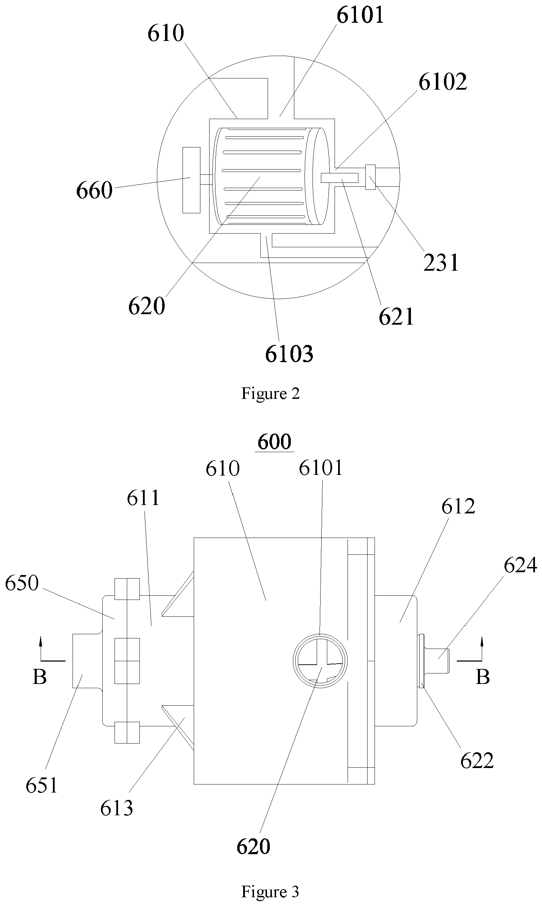

As shown in Figure 1 and Figure 2, the washing machine described in this embodiment includes:
a water holding barrel 100,
a circulation filtration pipeline, of which a water inlet and a water outlet are connected with the water holding barrel 100 respectively, and in which a circulation pump 400 is arranged; and
a filter device 600, arranged between a water outlet of the circulation pump 400 and the water outlet of the circulation filtration pipeline.

In this embodiment, the filter device 600 specifically includes:
a filter chamber 610, on which a water inlet 6101, a filtered water outlet 6102 and a sewage outlet 6103 are arranged;
a filter mechanism 620, rotatably arranged in the filter chamber 610; and
a driving mechanism 660, for driving the filter mechanism 620 to rotate in the filter chamber 610.

Wherein, the water inlet 6101 of the filter device 600 is located above the highest water level of the washing machine.

The sewage outlet 6103 is connected with the sewage pipeline 240, and the sewage pipeline 240 is provided with a sewage control valve 241 for controlling the on-off of the sewage pipeline 240. The water in the filter device 600 can be controlled to flow out or not flow out from the sewage outlet 6103 by opening and closing the sewage control valve 241.

In detail, the water holding barrel 100 is provided with a drainage pipe 260 of the water holding barrel connected with a water inlet of the circulation pump 400, and the water outlet of the circulation pump 400 is connected with the drainage pipeline 210. The drainage pipeline 210 is connected with the circulation pipeline 220, and the water outlet of the circulation pipeline 220 is connected with the water inlet 6101 of the filter device 600. When the circulation pump 400 is turned on, the water in the water holding barrel 100 enters the filter device 600 through the drainage pipe 260 of the water holding barrel, the circulation pump 400, the drainage pipeline 210 and the circulation pipeline 220 sequentially.

The water inlet 6101 of the filter device 600 is located above the highest water level of the washing machine, the water inlet of the circulation filtration pipeline is connected with the bottom area of the water holding barrel 100, and a part of pipe of the circulation filtration pipeline between the water inlet thereof and the filter device 600 is used to allow water to flow upwards. In this embodiment, part of the drainage pipeline 210 is arranged outside the bottom of the water holding barrel 100, is extended vertically upwards, and is connected with the circulation pipeline 220.

In this embodiment, the filtered water outlet 6102 of the filter device 600 is used to discharge the filtered water, which is communicated with the water holding barrel 100 through the return water pipeline 230. The return water pipeline 230 is specifically connected to the window pad 110 at the opening of the water holding barrel 100. The return water pipeline 230 is further provided with a return water control valve 231 for controlling the on-off of the return water pipeline 230.

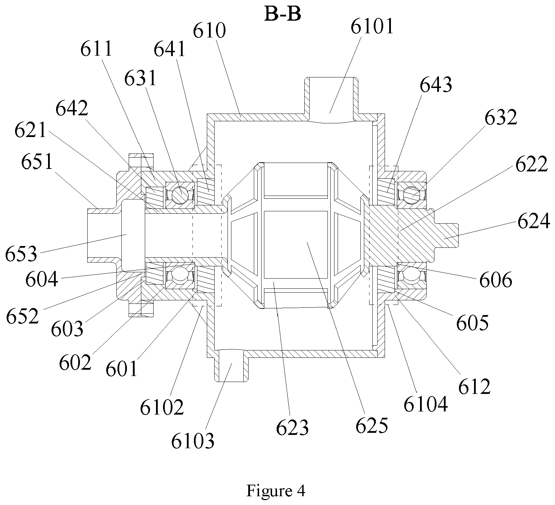

The filter mechanism 620 has a water outlet joint 621 being communicated with the filtered water outlet 6102. In detail, as shown in figures 3 and 4, the filter mechanism 620 includes a filter screen support and a filter screen 625.

The filter screen support specifically includes: a filter screen support part 623, located inside the filter chamber 610; the filter screen 625 covering the surface of the filter screen support part 623, to separate the inside of the filter chamber 610 into an outer chamber and an inner chamber, wherein,; and
the water outlet joint 621 being communicated with the inner chamber.

During the washing and rinsing process of the washing machine, the washing water in the water holding barrel 100 is circulated for being filtered in the washing machine. Specifically, when the return water control valve 231 is opened and the sewage control valve 241 is closed, the circulation pump 400 is powered on to deliver the washing water to be filtered in the water holding barrel 100 to the filter device 600. The washing water to be filtered enters in the filter chamber 610 through the water inlet 6101. When the washing water passes through the filter mechanism 620, the filtered impurities in the washing water are blocked by the filter screen 625 and adhered to the surface of the filter screen 625, so that the filtered water stored in the chamber enclosed by the filter screen 625 does not contain the filtered impurities such as lint. The filtered washing water passes through the water outlet joint 621, and flows out of the filter chamber 610 through the filtered water outlet 6102, and then flows back to the water holding barrel 100 through the return water pipeline 230.

For the filtered impurities attached to the surface of the filter screen 625 after filtration, the filter device 600 in the washing machine can be self-cleaned. The filtered impurities can be automatically discharged from the sewage outlet 6103 of the filter device 600, without the need for the user to take out the filter device 600 for manual cleaning, so it is convenient to use.

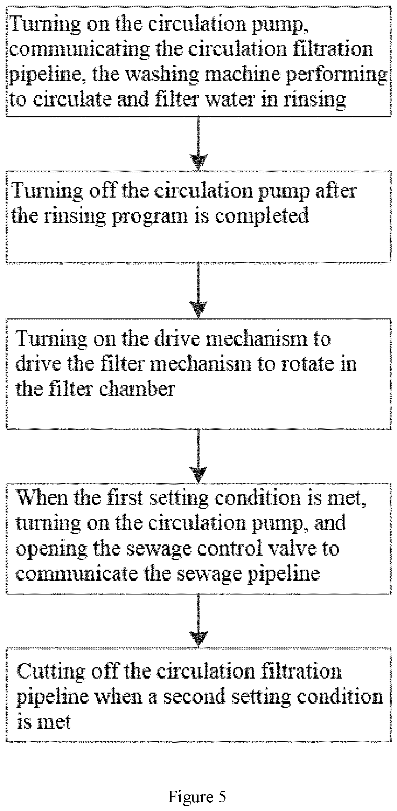

As shown in Figures 1 and 5, in order to achieve the above-mentioned purpose of cleaning the filter device 600, the control method of the washing machine in this embodiment includes:
turning on the circulation pump 400 to open the circulation filtration pipeline, the washing machine performing to circulate and filter water in rinsing process;
turning off the circulation pump 400, after the rinsing process is completed;
turning on the drive mechanism 660 to drive the filter mechanism 620 to rotate in the filter chamber 610;
when a first setting condition is met, the circulation pump 400 being turned on, and the sewage control valve 241 being opened to communicate the sewage pipeline 240; and
when a second setting condition is met, cutting off the circulation filtration pipeline.

Preferably, after the first setting condition is met, the driving mechanism 660 remains in working state to drive the filter mechanism 620 to continuously rotate.

In the above solution, the rinsing water is circulated and filtered in the washing machine during the rinsing process, and the filter device 600 and the circulation filtration pipeline are to be filled with the rinsing water.

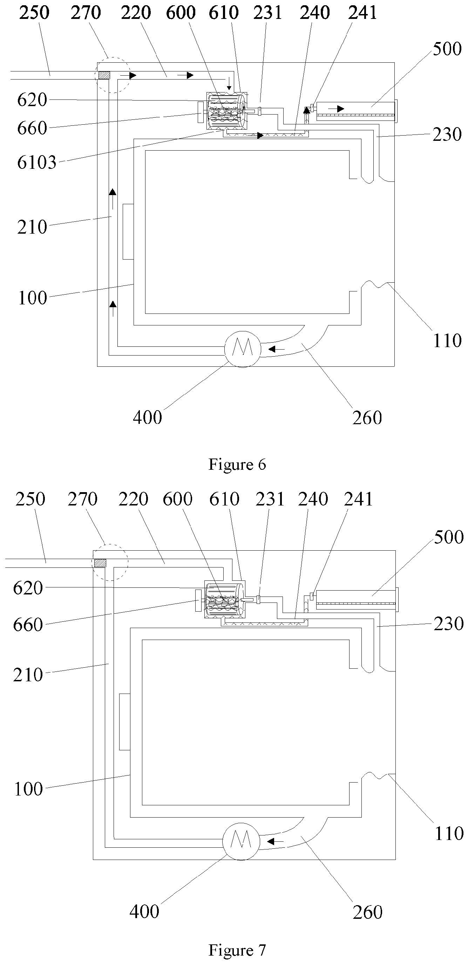

As shown in Figure 7, the circulation pump 400 is turned off after the rinsing process is finished, and the water in the drainage pipeline 210 and the circulation pipeline 220 flows back downwards under the action of gravity, and can at most flow back to the height of the water surface in the drainage pipeline 210 being flush with the water level in the water holding barrel 100. The pipeline between the water surface and the filter device 600 is filled with air. But if the filter device 600 is lower than the circulation pipeline 220, the water in the filter device cannot flow back through the circulation pipeline 220. When the circulation pump 400 is turned off and the return water control valve 231 is also closed, the sewage control valve 241 is closed at this time, and the water in the filter device 600 remains in the filter chamber 610 and is not drained out.

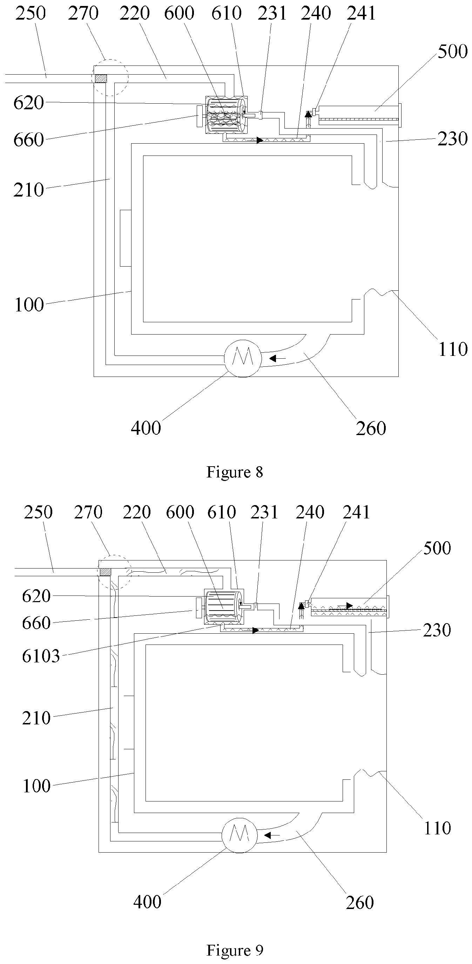

As shown in Figure 8, after the driving mechanism 660 is turned on, the filter mechanism 620 is driven to rotate at a high speed, so that filtered impurities such as lint are stripped off the surface of the filter mechanism 620 under the centrifugal force. At this time, since the return water control valve 231 and the sewage control valve 241 are both closed, the water in the filter chamber 610 does not flow out, and the filter mechanism 620 is in high-speed rotation to stir the water flow in the filter chamber 610 to form a turbulent water flow. An impact force is exerted on the surface of the filter mechanism 620 to cause the lint to be stripped off. The lint stripped off the surface of the filter mechanism 620 is mixed into the water in the filter chamber 610.

As shown in figure 9, when the circulation pump 400 is turned on and the sewage control valve 241 is also opened to communicate the sewage pipeline 240, the sewage in the filter device 600 can be discharged from the sewage outlet 6103. When the circulation pump 400 is turned on, the air in the drainage pipeline 210 and the circulation pipeline 220 is forced into the filter device 600, so that the sewage carrying lint in the filter device 600 is completely discharged from the sewage outlet 6103 under air pressure. The residual sewage is prevented from remaining in the filter device 600, and the cleaning effect on the filter device 600 is good. The sewage control valve 241 is opened and the circulation pump 400 is turned on, it is ensured that the sewage in the filter device 600 is driven to be fully drained out by the pressure generated by the air passing into the filter device 600.

In order to prevent the water in the water holding barrel 100 from entering the filter device through the circulation pipeline 220 after the sewage in the filter device 600 is drained out, the washing machine is preset with a second setting condition. When the second setting condition is met, the water in the water holding barrel 100 is stopped from being delivered to the filter device 600 by cutting off the circulation filtration pipeline.

In this embodiment, the way to cut off the circulation filtration pipeline may be to turn off the circulation pump 400.

In a further solution of this embodiment, a switching device 270 is provided on the circulation filtration pipeline. The switching device 270 is located between the water outlet of the circulation pump 400 and the filter device 600, and is connected with the external drainage pipeline 250 through which water is drained out of the washing machine. The switching device 270 can control to communicate one of the external drainage pipeline 250 and the filter device 600 with the water outlet of the circulation pump 400.

Specifically, the switching device 270 includes:
a water inlet, connected with an upper of the drainage pipeline 210;
a first water outlet, connected with the left end of the circulation pipeline 220;
a second water outlet, connected with the external drainage pipeline 250 through which water is drained out of the washing machine; and
a switching mechanism, for controlling one of the first water outlet and the second water outlet to be communicated with the water inlet.

The way to communicate the circulation filtration pipeline for the washing machine is: connecting the filter device 600 with the water outlet of the circulation pump 400 by the switching device 270.

The way to cut off the circulation filtration pipeline for the washing machine is: connecting the external drainage pipeline 250 with the water outlet of the circulation pump 400 by the switching device 270.

In a specific solution of this embodiment, the first setting condition is that the circulation pump 400 is in the off state for a first set time t1, and the second setting condition is that the circulation pump 400 is in the on-state for a second set time t2.

In the above solution, the specific values of the first set time t1 and the second set time t2 can be obtained through a large number of experiments in advance and directly written into the control program of the washing machine.

Specifically, the value of the first set time t1 is about the maximum time taken to decline the water level in the drainage pipeline 210 from start to stop, and the value of the second set time t2 is about the minimum time taken to rise the water level in the drainage pipeline 210 to near the top of the drainage pipeline 210 after the circulation pump 400 is turned on. In this way, it can be ensured that a larger amount of air can enter the pipeline when the circulation pump 400 is turned off, while, water can be effectively prevented from entering the filter device 600 after the circulation pump 400 is turned on.

In another solution of this embodiment, the height of the water level may also be used as the first setting condition and the second setting condition. Specifically, the first setting condition is: the water level in the pipeline between the circulation pump 400 and the filter device 600 reaches the first set value H1. The second setting condition is: the water level in the pipeline between the circulation pump 400 and the filter device 600 reaches the second set value H2. Among them, H 1 <H2.

In this embodiment, the water level is specifically the height of the water level in the drainage pipeline 210. A water level detection device may be installed in the drainage pipeline 210 of the washing machine to detect the water level in the drainage pipeline 210.

In the above solution, the value of the first set value H1 is greater than and as close as possible to the highest water level of the washing machine, so it is ensured that the water level in the drainage pipeline 210 can drop to the first set value H1 after the circulation pump 400 is turned off.

There is generally a certain time difference between the time receiving the signal that the water level in the drainage pipeline 210 rises to the second set value H2 by the washing machine and connecting the drainage pipeline 210 with the external drainage pipeline 250 by the switching device 270. In order to avoid causing water to enter the filter device 600 due to the response delay after the circulation pump 400 is turned on, there is a certain difference ΔH between the value of the second set value H2 and the water level corresponding to the top of the drainage pipeline 210. The specific value of the difference ΔH can be obtained through a large number of experiments in advance. So the washing machine has enough response time to control the switching device 270 to complete the switching of the waterway after receiving the signal that the water level reaches the second set value H2.

In a further solution of this embodiment, if the washing machine judges that the current running program is the last rinsing of the washing process, the circulation pump 400 is turned off after the rinsing process is completed, and the circulation pump 400 is turned on after meeting the first setting condition.

If the washing machine judges that the current running process is not the last rinsing of the washing program, the following operations are performed after the rinsing process is completed:
the circulation pump 400 being in working state; and
cutting off the circulation filtration pipeline when a third setting condition is met.

In the above solution, the washing machine needs to continue to operate the rinsing process after the intermediate rinsing stage, that is, the rinsing water will be circulated to pass through the filter device 600 for filtration. Therefore, in the intermediate rinsing stage, the sewage carrying lint in the filter device 600 is not drained out, and it is only necessary to remove the lint adhered to the surface of the filter mechanism 620.

As shown in figure 6, after the rinsing is finished, the return water control valve 231 is closed and the sewage control valve 241 is opened. The circulation pump 400 is kept running, and the water in the water holding barrel 100 is continuously delivered to the filter device 600 under the action of the circulation pump 400, to flush the inside of the filter device 600. The flushed sewage is discharged into the sewage pipeline 240 through the sewage outlet 6103.

In this embodiment, the third setting condition is a third preset time t3 when the rinsing process is completed. The value of the third preset time t3 is obtained through experiments in advance and written into the control program. It is ensured that the lint attached to the surface of the filter mechanism 620 can be basically stripped off.

Alternatively, when the water level in the water holding barrel 100 is declined to a preset value ΔH1, the circulation filtration pipeline is cut off. That is, the control switching device 270 is controlled to communicate the drainage pipeline 210 with the external drainage pipeline 250. The circulation pump 400 continues to be running, and the water remained in the water holding barrel 100 is drained out of the washing machine.

In the preferred solution of this embodiment, after rinsing is completed, the driving mechanism 660 is turned on to drive the filter mechanism 620 to rotate at a high speed in the filter chamber 610, to stir the water in the filter chamber 610. The attached lint can be stripped off the surface of the filter mechanism 620 and mixed into the water in the filter chamber 610 under double action of the centrifugal force and the turbulent water flow, and then drained out of the filter chamber 610 through the sewage outlet 6103. The efficiency of cleaning the lint is high.

In this embodiment, after the last rinsing stage of the washing machine is completed, the circulation pump 400 is first turned off, and then the circulation pump 400 is turned on to completely drain the sewage out of the filter device 600. At the end of the intermediate rinsing, the circulation pump 400 remains in the running state, so the circulation pump 400 is prevented from being turned on and off frequently during the operation of the washing machine, thereby affecting the service life of the circulation pump.

In this embodiment, the washing machine also performs to clean the filter device 600 after washing program is finished, and the specific control method is as follows:
turning on the circulation pump 400, communicating the water outlet of the circulation pump 400 with the filter device 600 by the switching device 270, opening the return water control valve 231 for performing circulating and filtering water in washing program in the washing machine;
after the washing program is finished, the circulation pump 400 being kept to be in running state, closing the return water control valve 231, and opening the sewage control valve 241; and
when a fourth setting condition is met, communicating the water outlet of the circulation pump 400 with the external drainage pipeline 250 by the switching device 270.

Wherein, the fourth setting condition may be the fourth preset time t4 after the washing program is completed, or be a preset value ΔH2 to which the water level in the water holding barrel 100 is declined.

After the washing program is finished, the rinsing program with circulation and filtration needs to be performed after the washing program. Similar to the intermediate rinsing, the sewage in the filter device 600 is not completely drained in the program, and the circulation pump 400 is controlled to be kept in running state and does not need to be turned off.

In this embodiment, after the washing program or the intermediate rinsing of the washing machine are completed, the circulation pump 400 is controlled to be kept in running state, and the water in the water holding barrel 100 is delivered to the filter device 600 for flushing. The sewage is drained out of the filter device 600 from the sewage outlet 6103 after being flushed. After the last rinsing is completed, the circulation pump 400 is first turned off, the air enters the pipeline, and then the circulation pump 400 is turned on again to press the air in the pipeline into the filter device 600. So the sewage is completely drained out. It is ensured that there is no sewage remained in the filter device 600 after the washing machine stops running, thereby effectively preventing the growth of bacteria. At the same time, only after the last rinsing is completed, the washing machine performs the operation of first turning off the circulation pump 400 and then turning it on again, which reduces the opening and closing operations of the circulation pump 400 and prolongs the service life of the circulation pump 400.

### Embodiment 2

As shown in figure 1, figure 2, figure. 10 and figure 11, as a further limitation is described based on Embodiment 1. The sewage pipeline 240 is connected with a recovery device 500 for collecting the filtered impurities 501.

The recovery device 500 includes:
a housing 510, having a recovery chamber inside;
a filter assembly 520, arranged in the recovery chamber and dividing the recovery chamber into a first chamber 531 and a second chamber 532; wherein,
the sewage pipeline 240 is connected with the first chamber 531, the sewage carrying the filtered impurities 501 enters the first chamber 531 and enters the second chamber 532 after being filtered by the filter assembly 520, and the filtered impurities 501 are collected in the first chamber 531.

Specifically, the filter assembly 520 may be a frame horizontally arranged at a certain height in the recovery chamber and a filter net covering on the frame. After the sewage carrying the filtered impurities 501 enters the first chamber 531, the water enters the second chamber 532 through the filter assembly 520, and the filtered impurities 501 are blocked by the filter net and remained on the upper surface of the filter assembly 520. The housing 510 of the recovery device 500 is capable of being inserted in and extracted from the washing machine, and the upper side of the housing 510 has an opening. The user pulls out the housing 510 from the washing machine, the filtered impurities 501 adhered to the upper surface of the filter assembly 520 can be cleaned.

Preferably, the second chamber 532 is communicated with the main water inlet pipeline of the washing machine through a pipeline, so that the clean water being filtered out the impurities 501 can be delivered into the water holding barrel 100 for reuse. Alternatively, the second chamber 532 is communicated with the drainage pipeline of the washing machine through a pipeline, and the water being filtered out the impurities 501 is delivered into the drainage water flow of the washing machine and drained out of the washing machine.

In the above scheme, after the sewage carrying the filtered impurities 501 is delivered into the recovery device 500, the filtered impurities 501 are collected in the first chamber 531 of the recovery device 500, and is not mixed into the drainage water to be directly drained out of the washing machine. Therefore, the fine lint in the filtered impurities 501 can be prevented from entering the ecological cycle along with the drainage water flow, thereby preventing the fine lint from being in the ecological cycle to cause harm to the ecological environment and human health.

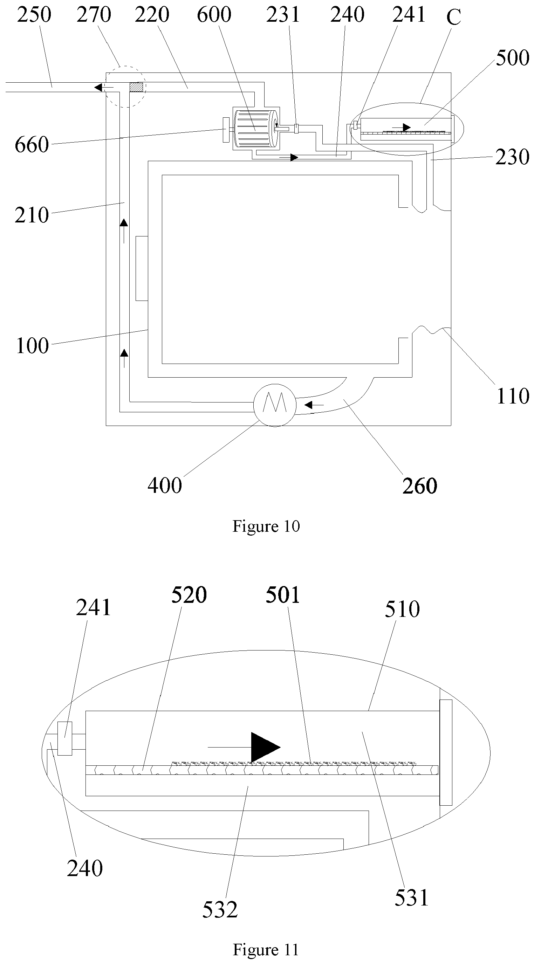

Further, the upper of the drainage pipeline 210 is connected with the switching device 270, and the switching device 270 can control to connect one of the circulation pipeline 220 and the external drainage pipeline 250 with the drainage pipeline 210. As shown in figure 1, the drainage pipeline 210 is connected with the circulation pipeline 220. The washing water can circularly flow through the filter device 600 for filtration under the action of the circulation pump 400. As shown in figure 10, the drainage pipeline 210 is connected with the external drainage pipeline 250. Under the action of the circulation pump 400, the water in the water holding barrel 100 is drained out through the drainage pipe 260 of the water holding barrel, and passes through the drainage pipeline 210, and then delivered to the external drainage pipeline 250 to be drained out of the washing machine.

By the above-mentioned setting method, there is no need to respectively arrange the circulation filtration pipeline and the drainage pipeline independent from each other inside the washing machine, and there is no need to separately arrange the drainage pump and the circulation pump. The connection modes of the pipelines are changed only by the operation of the switching device 270, so the same one circulation pump 400 can respectively realize two functions of draining water outward and circulating and filtering washing water. The connection of the pipelines in the washing machine is simplified, the space occupied by the pipes is saved, and at the same time, only setting one circulation pump 400 can also reduce the production cost.

The washing machine in this embodiment at least performs a circulating and filtering operation, a self-cleaning operation, and a draining operation during the running of the washing program.

As shown in figure 1 , the circulating and filtering operation includes: closing the sewage control valve 241, opening the return water control valve 231 to communicate the return water pipeline 230; turning on the circulation pump 400, connecting the drainage pipeline 210 with the circulation pipeline 220 by the switching device 270, so that the water in the water holding barrel 100 is delivered to the filter device 600, and flows back to the water holding barrel 100 after the impurities are filtered out by the filter device 600.

Specifically, the circulating and filtering operation is performed in the washing program and one or more rinsing program in the process of washing laundry. The circulation pump 400 is turned on after feeding water for a certain time in the washing program and each rinsing program, and the circulating and filtering operation is performed.

In detail, in feeding water in the washing machine, the water level in the water holding barrel 100 is detected. When the water level reaches a preset water level, the circulation pump 400 is turned on to start the circulating and filtering operation. In this way, the inside of the circulation pump 400 is prevented from sucking air to generate noise because the amount of water in the water holding barrel 100 is too small.

After the washing program and the rinsing program are completed, the washing machine performs a self-cleaning operation before draining. The self-cleaning operation is specifically described as Embodiment 1. After the washing program or the intermediate rinsing program is completed, the circulation pump 400 is kept in running state, and the water in the water holding barrel 100 is delivered into the filter device 600 for flushing. The sewage is drained into the recovery device 500 after the filter device is flushed. After the last rinsing program is completed, the circulation pump 400 is first turned off, and the drive mechanism 660 is turned on to drive the filter mechanism 620 to rotate. When the first setting condition is met, the circulation pump 400 is turned on again and the sewage control valve 241 is in open, to press the air in the pipeline into the filter device 600 to make the sewage be fully drained out.

After the self-cleaning operation is completed, the washing machine executes the drainage operation. The drainage pipeline 210 is connected with the external drainage pipeline 250 through the switching device 270, and the circulation pump 400 is kept in running state, so the water remained in the water holding barrel 100 passes through the drainage pipeline 210 and the external drainage pipeline 250 to be drained out of the washing machine.

In this embodiment, the recovery device 500 of the washing machine is in communication with the filter device 600, and used for collecting the filtered impurities 501 discharged from the filter device 600. The filtered impurities 501 is prevented from being mixed into the drainage water flow and directly drained out of the washing machine, so the filtered impurities do not enter the ecological cycle, thereby preventing the fine lint in the filtering impurities 501 from causing harm to the ecological environment and human health. The drainage pipeline 210 of the washing machine is connected with the switching device 270, and the connection mode of the pipelines in the washing machine can be changed through the action of the switching device 270. Through one circulation pump 400, the washing water can not only be circulated and filtered, but also be drained out of the washing machine. The internal structure of the washing machine is simplified.

### Embodiment 3

As shown in Figure 3 and Figure 4, the embodiment provides a filter device 600 applied in Embodiment 1 and Embodiment 2.

Specifically, the filter device 600 includes:
the filter chamber 610 having a water inlet 6101 and a filtered water outlet 6102, and a sealing support part 611 formed by the outer circumference of the filtered water outlet 6102 being extended toward the outside the filter chamber 610;
a filter mechanism 620,being rotatably arranged in the filter chamber 610, wherein an end of the filter mechanism is a water outlet joint 621 inserted in the sealing support part 611 and the water outlet joint 621 is rotatably and sealingly connected with the sealing support part 611;
a first bearing 631, being sleeved on the water outlet joint 621; and
a first sealing member 641, being disposed on the side of the first bearing 631 facing the inside of the filter chamber 610, for sealing the gap between the water outlet joint 621 and the sealing support part 611.

Specifically, the filter mechanism 620 includes a filter screen support and a filter screen 625.

The filter screen support specifically includes: a filter screen support part 623 located inside the filter chamber 610, and the filter screen 625 covering the surface of the filter screen support part 623;
the water outlet joint 621, being arranged at the left side of the filter screen support part 623 and rotatably inserted in the sealing support part 611; and
a rotating supporting part 622, being arranged at the right side of the filter screen support part 623 and rotatably connected with the filtering chamber 610.

In the above solution, The first bearing 631 is arranged between the water outlet joint 621 and the sealing support part 611 to support the water outlet joint 621, so that the water outlet joint 621 can smoothly rotate in the sealing support part 611. It is ensured that the filter mechanism 620 is stably rotated in the filter chamber 610 due to the stable structure. The first sealing member 641 is arranged on the right side of the first bearing 631, so the washing water in the filter chamber 610 cannot enter the gap between the water outlet joint 621 and the sealing support part 611.The first bearing 631 is prevented from contacting with water, to avoid the failure of the first bearing 631 and ensure the function of the first bearing 631. At the same time, the first sealing member 641 also prevents unfiltered washing water from flowing out from the filtered water outlet 6102 through the sealing support part 611, which affects the efficiency of removing lint through the filter device 600.

In the specific solution of this embodiment, the first sealing member 641 is sleeved on the water outlet joint 621, the inner wall of the first sealing member 641 is in sealing connection with the outer wall of the water outlet joint 621, and the outer wall of the first sealing member 641 is rotatable and hermetically connected with the sealing support part 611.

In a further solution of this embodiment, the filter device 600 further includes a second sealing member 642. The second sealing member 642 is arranged on the side of the first bearing 631 opposite to the interior of the filter chamber 610, for covering the gap between the water outlet joint 621 and the sealing support part 611.

Specifically, the second sealing member 642 is sleeved on the water outlet joint 621, the inner wall of the second sealing member 642 is in sealing connection with the outer wall of the water outlet joint 621, and the outer wall of the second sealing member 642 is rotatable and hermetically with the inner wall of the sealing support part 611.

In the above solution, the second sealing member 642 is provided on the left side of the first bearing 631.The water flowing out through the water outlet joint 621 can be blocked by the second sealing member 642 and does not contact with the first bearing 631. The first bearing 631 is located between the first sealing member 641 and the second sealing member 642, so that it is ensured that the installation environment of the first bearing 631 is water-free to the greatest extent, and avoided the rust of the first bearing 631 when contacting with water. Therefore the filter mechanism 620 can smoothly rotate.

In a further solution of this embodiment, the inner wall of the sealing support part 611 has a stepped structure. Annular structures are sequentially formed from the end of the sealing support part 611 to the outer side of the filter chamber 610, and the inner diameters of the annular structures are gradually decreased from the first limiting surface 601, the second limiting surface 602 and the third limiting surface 603.

The surface of the first sealing member 641 facing the outside of the filter chamber 610 abuts against the first limiting surface 601.The surface of the first bearing 631 facing outside the filtering chamber 610 abuts against the second limiting surface 602.The surface of the second sealing member 642 facing the outside of the filter chamber 610 abuts against the third limiting surface 603.

In the above solution, a plurality of vertical annular limiting surfaces are formed on the inner wall of the sealing support part 611 with a stepped structure, which respectively abut against the left surfaces of the first sealing member 641, the first bearing 631 and the second sealing member 642 to restrict the movement of the above three parts in the axial direction of the water outlet joint 621. So the match between the water outlet joint 621 and the sealing support part 611 is prevented from loosening during the rotation of the filter mechanism 620.

In the preferred solution of this embodiment, the outer diameter of the end of the water outlet joint 621 near the outside of the filter chamber 610 is smaller than the outer diameter of the other end. Annular structures are formed on the outer wall of the water outlet joint 621, and the fourth limiting surface 604 of the water outlet joint 621 is perpendicular to the axis of the water outlet joint 621. A surface of the first bearing 631 facing the inside of the filter chamber 610 abuts against the fourth limiting surface 604.

The outer diameter of the left end of the water outlet joint 621 is smaller than that of the right end, and the fourth limit surface 604 towards the left is formed at the abrupt change in the outer diameter and abuts against the right side surface of the first bearing 631. In this way, both sides of the first bearing 631 are limited by the limiting structures, and the structure is more stable.

In this embodiment, the end of the sealing support part 611 away from the filter chamber 610, that is, the left end of the sealing support part 611, is connected to the filter chamber flange 650. The middle of the filter chamber flange 650 has a through-opening 653 for being communicated with the water outlet joint 621. The outer periphery of the through-opening 653 is extended away from the sealing support portion 611 to form a connection portion 651.

Preferably, the surface of the filter chamber flange 650 facing the side of the sealing support part 611 has a protruding insertion portion 652, and the insertion portion 652 is inserted into the opening at the left end of the sealing support part 611.

In the above scheme, the left end of the sealing support part 611 is connected to the filter chamber flange 650, and the connection part 651 is formed on the filter chamber flange 650. The outer diameter of the connection part 651 is smaller than the outer diameter of the sealing supporting part 611, and the inner diameter of the connection part 651 is preferably equal to the inner diameter of the water outlet joint 621. When the filter device 600 is installed in the washing machine, the connection part 651 is connected with the pipeline to allow the washing water without lint to flow out after being filtered. Compared with the way that the pipeline is directly connected to the left end of the sealing support part 611, the installation is easier.

The right side of the filter chamber flange 650 has the insertion portion 652 inserted into the opening of the left end of the sealing support part 611, which facilitates the positioning of the filter chamber flange 650 and the sealing support portion 611 during assembly. A number of fixing parts are respectively arranged on the periphery of the filter chamber flange 650 and the sealing support part 611, and the filter chamber flange 650 is fixed with the sealing support part 611 by screws passing through the fixing parts.

In a further solution of this embodiment, the rotation support part 622 at the right end of the filter mechanism 620 is extended toward the outside of the filter chamber 610 along the rotation axis, and the filter chamber 610 is provided with an installation port 6104 for allowing the rotation support part 622 to pass through. The rotation support part 622 is rotatably and hermetically connected with the installation port 6104.

In this embodiment, the filter mechanism 620 is driven to rotate by the drive mechanism. The drive mechanism is arranged the outside of the filter chamber 610, thereby avoiding being contact with washing water. The rotating support part 622 is protruded from the right end of the filter chamber 610, and a motor installation part 624 is provided at the right end of the rotation support part 622 for connecting with the drive mechanism, such as a motor.

Further, the outer circumference of the installation port 6104 is extended outward from the filter chamber 610 along the axis of the rotation support part 622 to form a sleeve portion 612.The third sealing member 643 is sleeved on the rotation support part 622. The inner wall of the third sealing member 643 is hermetically connected with the outer wall of the rotation support part 622, and the outer wall of the third sealing member 643 is rotatably and hermetically connected with the inner wall of the sleeve portion 612.

A second bearing 632 is provided between the sleeve part 612 and the rotating support part 622, and the second bearing 632 is sleeved on the rotating support part 622 and located on the side of the third sealing member 643 facing the outside of the filter chamber 610.

In the above solutions, the third sealing member 643 is used for preventing the water in the filter chamber 610 from leaking from the installation port 6104. The second bearing 632 can support the rotating support part 622, ensuring that the rotation of the rotating support part 622 relative to the sleeve part 612is smoother. The second bearing 632 is arranged on the right side of the third sealing member 643 and does not contact with the water in the filter chamber 610.

In the preferred solution of this embodiment, the inner diameter of the end of the sleeve part 612 away from the filter chamber 610 is smaller than the inner diameter of the other end, the annular structure is formed on the inner wall of the sleeve part 612, and the fifth limiting surface 605 of the sleeve part 612 is perpendicular to the axis of the rotating support part 622. A surface of the third sealing member 643 facing the outside of the filter chamber 610 abuts against the fifth limiting surface 605.

The outer diameter of one end of the rotation support part 622 close to the filter chamber 610 is larger than the outer diameter of the other end, the annular structure is formed on the outer wall of the rotating support part 622, and a sixth limiting surface 606 of the rotation support part is perpendicular to the axis of the rotation support part 622. The surface of the second bearing 632 facing the inside of the filter chamber 610 abuts against the sixth limiting surface 606.

In the above solution, the inner diameter of the right end of the sleeve part 612 is smaller than the inner diameter of the left end, and the fifth limiting surface 605 toward the left side is formed at an abrupt change in the inner diameter of the sleeve part 612 and abuts against the right side surface of the third sealing member 643. The outer diameter of the right end of the rotating support part 622 is smaller than the outer diameter of the left end, and the sixth limiting surface 606 toward the right side is formed at an abrupt change in the outer diameter and abuts against the left surface of the second bearing 632. The above structure restricts the movement of the third sealing member 643 and the second bearing 632 in the axial direction of the rotating support part 622, and the structure is stable.

In this embodiment, the first sealing member 641, the second sealing member 642 and the third sealing member 643 are all oil seals. The right wall of the filter chamber 610 is arranged seperately from the peripheral side wall. The filter mechanism 620, and the first sealing member 641, the second sealing member 642 and the first bearing 631 on the left side are first installed in the interior of the filter chamber 610 as a whole, and the third sealing member 643 and the second bearing 632 are installed on the right side of the filter chamber, and finally the right wall of the filter chamber 610 is buckled with the peripheral side wall fasten.

In this embodiment, the cross-sectional area of the middle region of the filter screen support part 623 is constant, and a cone structure is located on the left end and the right end, so that the partial surface of the filter screen 625 is inclined to facilitate to make the attached lint fall off.

In this embodiment, the direction of the water inlet 6101 and the sewage outlet 6103 on the filter chamber 610 is perpendicular to the axial direction of the filter mechanism 620.

Preferably, the filter chamber 610 has a cylindrical structure, the water inlet 6101 is arranged near the right end of the filter chamber 610, the sewage outlet 6103 is arranged near the left end of the filter chamber 610, and the water inlet 6101 and the sewage outlet 6103 are symmetrically located around the peripheral direction of filter chamber 610.

In the above scheme, the position of the water inlet 6101 is as far away from the water outlet joint 621 as possible, so that the area of the filter screen 625 can be fully utilized. The water inlet 6101 and the sewage outlet 6103 are set on the upper and the bottom respectively, and are staggered in the axial direction of the filter chamber 610, which is beneficial to fully discharge the sewage in the filter chamber 610after cleaning the filter device 600.

In a further solution of this embodiment, the outer wall of the sealing support part 611 is provided with a reinforcing rib 613 extending in radial direction of the sealing support part 611, and the reinforcing rib 613 is connected with the surface of the filter chamber 610 where the filtered water outlet 6102 is located.

Since the sealing support part 611 is extended out from the left side of the filter chamber 610 by a certain length, the reinforcing rib 613 supports the peripheral side wall of the sealing support part on the outside, ensuring the strength of the sealing support part 611.

In this embodiment, the filter mechanism 620 is rotatably arranged in the filter chamber 610 of the filter device 600. After the washing water to be filtered enters the filter chamber 610, the filtered water after removing the lint enters the filter mechanism 620 and flows out through the water outlet joint 621. The filtered lint is attached to the outer surface of the filter mechanism 620. By driving the filter mechanism 620 to rotate, the lint can be stripped off and discharged from the sewage outlet 6103 along with the water in the filter chamber 610. The self-cleaning function of the filter device 600 is realized without cleaning up manually by the user.

Both ends of the filter mechanism 620 are respectively provided with the first bearing 631 and the second bearing 632 for supporting, to ensure the smooth and stable rotation of the filter mechanism 620 in the filter chamber 610. At the same time, through the arrangement of the first sealing member 641, the second sealing member 642 and the third sealing member 643, the first bearing 631 and the second bearing 632 are prevented from being in contact with water, and failure of both is avoided.

The embodiments merely describe preferred embodiments of the present invention, rather than limiting the concept and scope of the present invention. The preferred embodiments are disclosed above, and not used for limiting the present invention. Under the premise of not departing from the idea of the present invention, various changes and improvements made to the technical solution of the present invention by those skilled in the art, such as simple amendment, equal change and modify according concept of the present invention, shall all fall within the protection scope of the present invention. The solutions in the above embodiments can be further combined or substituted.

## Claims

1. A control method for a washing machine, the washing machine comprising:
a water holding barrel,
a circulation filtration pipeline, of which a water inlet and a water outlet are connected with the water holding barrel respectively, and in which a circulation pump is arranged; and
a filter device, arranged between a water outlet of the circulation pump and the water outlet of the circulation filtration pipeline; wherein,
the control methods include:
turning on the circulation pump, communicating the circulation filtration pipeline, the washing machine performing to circulate and filter water in rinsing program;
turning off the circulation pump after the rinsing program is completed;
turning on the circulation pump when a first setting condition is met; and
cutting off the circulation filtration pipeline when a second setting condition is met.

2. The control method for the washing machine according to claim 1, wherein, a process of cutting off the circulation filtration pipeline includes: closing the circulation pump.
or, a switching device is provided on the circulation filtration pipeline, the switching device is located between the water outlet of the circulation pump and the filter device, and is connected with an external drainage pipeline for draining water out of the washing machine;
a process of communicating the circulation filtration pipeline comprises: connecting the filter device with water outlet of the circulation pump by the switching device, and a process of cutting off the circulation filtration pipeline comprises: connecting the external drainage pipeline with the water outlet of the circulation pump by the switching device.

3. The control method for the washing machine according to claim 1 or 2, wherein, the first setting condition is that the circulation pump is in the off state for a first set time t1;
and/or, the second setting condition is that the circulation pump is in the on-state for a second set time t2.

4. The control method for the washing machine according to claim 1 or 2, wherein, the first setting condition is that the water level in a pipeline between the circulation pump and the filter device reaches a first set value H1;
the second setting condition is that the water level in the pipeline between the circulation pump and the filter device reaches a second set value H2;
wherein, H 1 <H2.

5. The control method for the washing machine according to any one of claims 1 to 4, wherein, the filter device includes:
a filter chamber;
a filter mechanism, rotatably arranged in the filter chamber; and
a driving mechanism, for driving the filter mechanism to rotate in the filter chamber;
the control method also includes: after the rinsing program is completed, turning on the drive mechanism to drive the filter mechanism to rotate in the filter chamber;
preferably, when the first setting condition is met, the driving mechanism is in working state to drive the filter mechanism to continuously rotate.

6. The control method for the washing machine according to any one of claims 1 to 5, wherein, if it is judged by the washing machine that a current running program is the last rinsing in the washing process, the circulation pump is turned off after the rinsing program is completed, and the circulation pump is turned on after the first setting condition is met.

7. The control method for the washing machine according to claim 6, wherein, if it is judged by the washing machine that the current running program is not the last rinsing in the washing process, , performing the operations comprise after the rinsing is completed:
the circulation pump being kept in working state; and
cutting off the circulation filtration pipeline when a third setting condition is met;
preferably, the third setting condition is a third preset time t₃ after the rinsing program is completed;
preferably, after the rinsing program is completed, the driving mechanism of the filter device is turned on to drive the filter mechanism to rotate in the filter chamber.

8. The control method for the washing machine according to any one of claims 1 to 7, wherein, the filter device is connected with a sewage pipeline through which the filtered impurities are drained out, and a sewage control valve for controlling the on-off of the sewage pipeline is arranged in on the sewage pipeline;
the control method also includes:
the sewage control valve being kept in close when the washing machine performs a circulating and filtering operation rinsing; and
after the circulation pump is turning off and the first setting condition is met, turning on the circulation pump, and opening the sewage control valve to communicate the sewage pipeline.

9. A washing machine, including: a water holding barrel, a circulation filtration pipeline of which a water inlet and a water outlet are communicated with the water holding barrel respectively, and a circulation pump and a filter device arranged on the circulation filtration pipeline, wherein,
a water inlet of the filter device is located above the highest water level of the washing machine;
the control method of the washing machine according to any one of claims 1 to 8 is used in the washing machine.

10. The washing machine according to claims 9, wherein, the filter device is arranged above the water holding barrel;
preferably, the circulation pump is arranged under the water holding barrel..
